# EUROPEAN PATENT APPLICATION

(11) **EP 4 447 336 A1**
(43) Date of publication of application: **16.10.2024**
(21) Application number: 22903447.5
(22) Date of filing: 06.12.2022
(51) Int. Cl.: H04B 7/06

(54) **SRS RESOURCE ALLOCATION METHOD AND APPARATUS, TERMINAL, AND NETWORK SIDE DEVICE**

(30) Priority: 09.12.2021 CN 202111499285
(71) Applicant: Vivo Mobile Communication Co., Ltd., Dongguan, Guangdong 523863 (CN)
(72) Inventor: SHI, Yuan, Dongguan, Guangdong 523863 (CN); TAMRAKAR, Rakesh, Dongguan, Guangdong 523863 (CN)
(74) Representative: Lavoix
(86) International application number: PCT/CN2022/136892
(87) International publication number: WO 2023/104025

(57) **Abstract**

This application discloses an SRS resource configuration method and apparatus, a terminal, and a network side device, and pertains to the field of wireless communication technologies. The SRS resource configuration method according to the embodiments of this application includes: receiving, by a network side device, a supported antenna switching capability for SRS reported by a terminal; determining, by the network side device based on the antenna switching capability, the number of SRS resource sets configured for the terminal; and sending, by the network side device, SRS configuration information to the terminal, where the SRS configuration information indicates the number of the SRS resource sets.

## Description

### CROSS-REFERENCE TO RELATED APPLICATIONS

This application claims priority to Chinese Patent Application No. 202111499285.4 filed in China on December 09, 2021, which is incorporated herein by reference in its entirety.

### TECHNICAL FIELD

This application pertains to the field of wireless communication technologies, and in particular, to an SRS resource configuration method, a terminal, and a network side device.

### BACKGROUND

In the 5th Generation (5th Generation, 5G) mobile communications system, a sounding reference signal (SRS) antenna switching transmission mode (SRS antenna switching) supported by a terminal device includes: 1T2R; 2T4R; 1T4R, T=R, or the like. Based on different transmission periods of SRS, SRS transmission can be divided into the following manners: periodic transmission, semi-persistent transmission, and aperiodic transmission. The SRS antenna switching transmission is applicable to a scenario of uplink and downlink reciprocity, and is used for a network device to obtain downlink channel information.

### SUMMARY

Embodiments of this application provide an SRS resource configuration method, a terminal, and a network side device, to resolve the problem that the number of resource sets configured at the network side exceeds the support capability of the terminal.

According to a first aspect, an SRS resource configuration method is provided, the method is applied to a network side device, and the method includes:
receiving, by a network side device, a supported antenna switching capability for SRS reported by a terminal;
determining, by the network side device based on the antenna switching capability, the number of SRS resource sets configured for the terminal; and
sending, by the network side device, SRS configuration information to the terminal, where the SRS configuration information indicates the number of the SRS resource sets.

According to a second aspect, an SRS resource configuration method is provided, the method is applied to a terminal, and the method includes:
reporting, by a terminal, a supported antenna switching capability for SRS to a network side device; and
receiving, by the terminal, SRS configuration information of the network side device, where the SRS configuration information indicates the number of SRS resource sets configured by the network side device for the terminal based on the antenna switching capability.

According to a third aspect, an SRS resource configuration apparatus is provided, the apparatus is applied to a network side device, and the apparatus includes:
a receiving module, configured to receive a supported antenna switching capability for SRS reported by a terminal;
a processing module, configured to determine, based on the antenna switching capability, the number of SRS resource sets configured for the terminal; and
a sending module, configured to send SRS configuration information to the terminal, where the SRS configuration information indicates the number of the SRS resource sets.

According to a fourth aspect, an SRS resource configuration apparatus is provided, the apparatus is applied to a terminal, and the apparatus includes:
a reporting module, configured to report a supported antenna switching capability for SRS to a network side device; and
a receiving module, configured to receive SRS configuration information of the network side device, where the SRS configuration information indicates the number of SRS resource sets configured by the network side device for the terminal based on the antenna switching capability.

According to a fifth aspect, a terminal is provided. The terminal includes a processor and a memory, the memory stores a program or an instruction that can be run on the processor, and the program or the instruction is executed by the processor to implement steps of the method according to the second aspect.

According to a sixth aspect, a terminal is provided, including a processor and a communications interface, where the communications interface is configured to: report a supported antenna switching capability for SRS to a network side device; and receive SRS configuration information of the network side device, where the SRS configuration information indicates the number of SRS resource sets configured by the network side device for the terminal based on the antenna switching capability.

According to a seventh aspect, a network side device is provided. The network side device includes a processor and a memory, and the memory stores a program or an instruction executable on the processor, where the program or the instruction is executed by the processor to implement the steps of the method according to the first aspect.

According to an eighth aspect, a network side device is provided, including a processor and a communications interface, where the processor is configured to determine, based on the antenna switching capability, the number of SRS resource sets configured for the terminal; and the communications interface is configured to receive a supported antenna switching capability for SRS reported by a terminal; and send SRS configuration information to the terminal, where the SRS configuration information indicates the number of SRS resource sets.

According to a ninth aspect, an SRS resource configuration system is provided, including a terminal and a network side device, where the terminal may be configured to perform steps of the SRS resource configuration method according to the second aspect, and the network side device may be configured to perform steps of the SRS resource configuration method according to the first aspect.

According to a tenth aspect, a readable storage medium is provided, where the readable storage medium stores a program or an instruction, and when the program or the instruction is executed by a processor, steps of the method according to the first aspect or steps of the method according to the second aspect are implemented.

According to an eleventh aspect, a chip is provided. The chip includes a processor and a communications interface, the communications interface is coupled to the processor, and the processor is configured to run a program or an instruction to implement the method according to the first aspect or the second aspect.

According to a twelfth aspect, a computer program/program product is provided, the computer program/program product is stored in a storage medium, and the computer program/program product is executed by at least one processor to implement steps of the SRS resource configuration method according to the first aspect or the second aspect.

According to a thirteenth aspect, a communications device is provided, configured to perform steps of the SRS resource configuration method according to the first aspect or the second aspect.

In the embodiments of this application, the network side device determines, based on the supported antenna switching capability for SRS reported by the terminal, the number of SRS resource sets configured for the terminal, so that the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

### BRIEF DESCRIPTION OF DRAWINGS

FIG. 1 is a block diagram of a wireless communication system to which embodiments of this application are applicable;
FIG. 2 is a schematic flowchart of an SRS resource configuration method at a network side device side according to an embodiment of this application;
FIG. 3 is a schematic flowchart of an SRS resource configuration method at a terminal side according to an embodiment of this application;
FIG. 4 is a structural block diagram of a communications device according to an embodiment of this application;
FIG. 5 is a schematic diagram of composition of a terminal according to an embodiment of this application; and
FIG. 6 is a schematic diagram of composition of a network side device according to an embodiment of this application.

### DESCRIPTION OF EMBODIMENTS

The following clearly describes technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the number of objects is not limited, for example, there may be one or more first objects. In addition, in the specification and claims, "and/or" represents at least one of connected objects, and a character "I" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The described technologies may be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communications system.

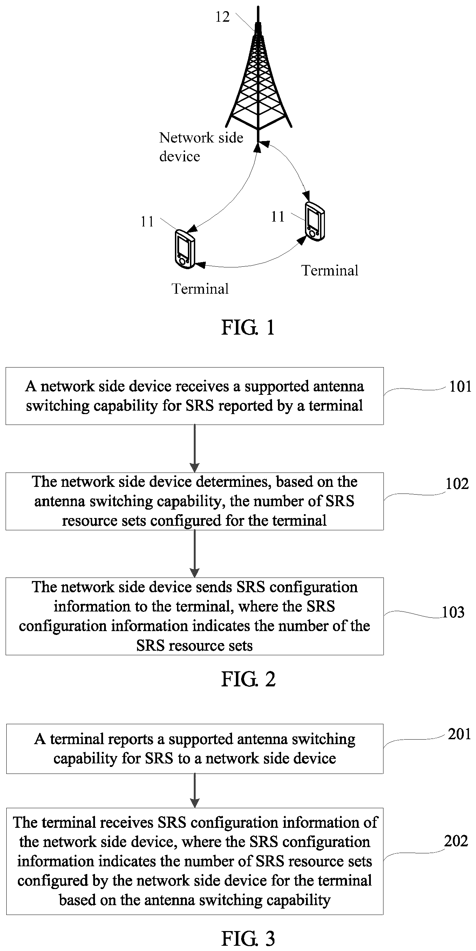

FIG. 1 is a block diagram of a wireless communication system to which embodiments of this application can be applied. The wireless communication system includes a terminal 11 and a network side device 12. The terminal 11 may be a terminal side device such as a mobile phone, a tablet personal computer (Tablet Personal Computer, TPC), a laptop computer (Laptop Computer, LC) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device, WD), vehicle user equipment (VUE), pedestrian user equipment (PUE), smart household (household devices with wireless communication functions, such as a refrigerator, a television, a washing machine, or furniture), a game console, a personal computer (personal computer, PC), a teller machine, or a self-service machine, and the wearable device includes a smart watch, a smart band, smart earphones, smart glasses, smart jewelry (a smart bracelet, a smart hand chain, a smart ring, a smart necklace, a smart bangle, a smart anklet, or the like), a smart wristband, smart clothes, and the like. It should be noted that a specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access node, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

In the related art, types of SRS resources include periodic SRS resources, semi-persistent SRS resources, and aperiodic SRS resources.

The terminal device generally supports a variety of antenna switching transmission modes for SRS. For example, the antenna switching transmission modes supported by the terminal device for SRS include one or more of the following six groups:
group one: 1 transmit antenna and 2 receive antennas (1T2R) and 2 transmit antennas and 4 receive antennas (2T4R);
group two: 1T2R and 1 transmit antennas and 4 receive antennas (1T4R);
group three: 1T2R and the number of transmit antennas being equal to the number of receive antennas (T=R);
group four: 1T4R and T=R;
group five: 1T2R, 1T4R, and T=R; and
group six: 1T2R, 1T4R, and 2T4R.

In the antenna switching transmission modes for SRS, the letter T represents transmission, and the number before the letter T represents the number of transmit antennas; the letter R represents reception, and the number immediately before the letter R represents the number of receive antennas; and T=R indicates that the number of transmit antennas is equal to that of receive antennas.

The Chinese in front of the antenna switching transmission mode for SRS is only explanatory words. For example, "1 transmit antenna 2 receive antennas" in front of 1T2R is an explanation of 1T2R, and "2 transmit antennas and 4 receive antennas" in front of 2T4R is an explanation of 2T4R. This does not constitute a specific limitation.

In various antenna switching transmission modes for SRS supported by the terminal device, there is a minimum number of transmit antennas, and there is also a minimum number of receive antennas corresponding to the minimum number of transmit antennas.

In the related art, for different antenna switching transmission modes for SRS, the network side device configures different SRS resource sets for the terminal.

### (1) Antenna switching transmission mode for 1T2R.

The network side device configures maximum two SRS resource sets for the terminal, that is, the network side device can configure 0 SRS resource set, 1 SRS resource set, or 2 SRS resource sets for the terminal.

When the network side device configures 2 SRS resource sets for the terminal, resource types of the 2 SRS resource sets need to be different.

The network side device can configure the periodic SRS resource set, the semi-persistent SRS resource set, and the aperiodic SRS resource set for the terminal.

For example, the network side device can configure the terminal with:
0 periodic SRS resource set and 0 semi-persistent SRS resource set;
0 periodic SRS resource set and 1 semi-persistent SRS resource set;
1 periodic SRS resource set and 0 semi-persistent SRS resource set;
1 periodic SRS resource set and 1 semi-persistent SRS resource set;
0 periodic SRS resource set and 0 aperiodic SRS resource set;
0 periodic SRS resource set and 1 aperiodic SRS resource set;
1 periodic SRS resource set and 0 aperiodic SRS resource set;
1 periodic SRS resource set and 1 aperiodic SRS resource set;
0 semi-persistent SRS resource set and 0 aperiodic SRS resource set;
0 semi-persistent SRS resource set and 1 aperiodic SRS resource set;
1 semi-persistent SRS resource set and 0 aperiodic SRS resource set; and
1 semi-persistent SRS resource set and 1 aperiodic SRS resource set.

Each SRS resource set is associated with 2 SRS resources, and each SRS resource is associated with 1 SRS port.

### (2) Antenna switching transmission mode for 2T4R.

The network side device configures maximum two SRS resource sets for the terminal, that is, the network side device can configure 0 SRS resource set, 1 SRS resource set, or 2 SRS resource sets for the terminal.

When the network side device configures 2 SRS resource sets for the terminal, resource types of the 2 SRS resource sets need to be different.

The network side device can configure the periodic SRS resource set, the semi-persistent SRS resource set, and the aperiodic SRS resource set for the terminal.

For example, the network side device can configure the terminal with:
0 periodic SRS resource set and 0 semi-persistent SRS resource set;
0 periodic SRS resource set and 1 semi-persistent SRS resource set;
1 periodic SRS resource set and 0 semi-persistent SRS resource set;
1 periodic SRS resource set and 1 semi-persistent SRS resource set;
0 periodic SRS resource set and 0 aperiodic SRS resource set;
0 periodic SRS resource set and 1 aperiodic SRS resource set;
1 periodic SRS resource set and 0 aperiodic SRS resource set;
1 periodic SRS resource set and 1 aperiodic SRS resource set;
0 semi-persistent SRS resource set and 0 aperiodic SRS resource set;
0 semi-persistent SRS resource set and 1 aperiodic SRS resource set;
1 semi-persistent SRS resource set and 0 aperiodic SRS resource set; and
1 semi-persistent SRS resource set and 1 aperiodic SRS resource set.

Each SRS resource set is associated with 2 SRS resources, and each SRS resource is associated with 1 SRS port.

### (3) Antenna switching transmission mode for 1 T4R.

1. The network side device can configure the periodic SRS resource set and the semi-persistent SRS resource set for the terminal. The network side device can configure 0 SRS resource sets or 1 SRS resource set for the terminal, that is, maximum 1 periodic SRS resource set is configured for the terminal, or maximum 1 semi-persistent SRS resource set is configured for the terminal.
   Each SRS resource set is associated with 4 SRS resources, and each SRS resource is associated with 1 SRS port.
2. The network side device can configure the aperiodic SRS resource set for the terminal, and the network side device can configure 0 SRS resource set or 2 SRS resource sets for the terminal, that is, maximum 2 aperiodic SRS resource sets are configured for the terminal, the 2 SRS resource sets are associated with 4 SRS resources in total, and each SRS resource is associated with 1 SRS port.

For example, the network side device can configure the terminal with:
0 periodic SRS resource set and 0 aperiodic SRS resource set;
0 semi-persistent SRS resource set and 0 aperiodic SRS resource set;
0 periodic SRS resource set and 2 aperiodic SRS resource sets;
0 semi-persistent SRS resource set and 2 aperiodic SRS resource sets;
1 periodic SRS resource set and 2 aperiodic SRS resource sets; and
1 semi-persistent SRS resource set and 2 aperiodic SRS resource sets.

### (4) Antenna switching transmission mode for 1 T 1 R, 2T2R, and 4T4R.

The network side device configures maximum two SRS resource sets for the terminal, that is, the network side device can configure 0 SRS resource set, 1 SRS resource set, or 2 SRS resource sets for the terminal.

When the network side device configures 2 SRS resource sets for the terminal, resource types of the 2 SRS resource sets can be the same.

The network side device can configure the periodic SRS resource set, the semi-persistent SRS resource set, and the aperiodic SRS resource set for the terminal.

For example, the network side device can configure the terminal with:
0 periodic SRS resource set;
1 periodic SRS resource set;
2 periodic SRS resource sets;
0 semi-persistent SRS resource set;
1 semi-persistent SRS resource set;
2 semi-persistent SRS resource sets;
0 aperiodic SRS resource set;
1 aperiodic SRS resource set;
2 aperiodic SRS resource sets;
1 periodic SRS resource set and 1 aperiodic SRS resource set;
1 periodic SRS resource set and 1 semi-persistent SRS resource set; and
1 semi-persistent SRS resource set and 1 aperiodic SRS resource set.

Configuration enhancements for the periodic SRS resource set and the semi-persistent SRS resource set are as follows.
(1) For supporting an antenna switching capability A (that is, the capability of supporting maximum 1 periodic SRS resource set + 2 semi-persistent SRS resource sets);
   for all antenna switching transmission modes: xTyR:
   support configuring maximum 1 periodic SRS resource set + 2 semi-persistent SRS resource sets;
   for example, the network side device can configure the terminal with:
   0 periodic SRS resource set + 0 semi-persistent SRS resource set;
   0 periodic SRS resource set + 1 semi-persistent SRS resource set;
   0 periodic SRS resource set + 2 semi-persistent SRS resource sets;
   1 periodic SRS resource set + 0 semi-persistent SRS resource set;
   1 periodic SRS resource set + 1 semi-persistent SRS resource set; and
   1 periodic SRS resource set + 2 semi-persistent SRS resource sets.
   For not supporting the antenna switching capability A,
   for the antenna switching transmission mode xTyR, when y>4, support configuring maximum 1 periodic SRS resource set + 1 semi-persistent SRS resource set;
   for the antenna switching transmission mode xTyR, when y<=4:
      for 1T2R and 2T4R, maximum two SRS resource sets are configured, the resource types of the two SRS resource sets need to be different, and the aperiodic SRS resource set needs to be considered;
      for 1T1R, 2T2R, and 4T4R, maximum two SRS resource sets are configured, and the aperiodic SRS resource set needs to be considered; and
      for 1T4R, maximum 1 periodic SRS resource set or 1 semi-persistent SRS resource set is configured, and the aperiodic SRS resource set is not considered.
(2) For supporting an antenna switching capability B (that is, supporting 1T4R in which 4 SRS resource sets are configured and 1T2R/2T4R in which 2 SRS resource sets are configured);
   for the antenna switching transmission mode xTyR, when y>4, this capability is not applicable; and
   for the antenna switching transmission mode xTyR, when y<4, support 1T4R in which 4 SRS resource sets are configured and 1 T2R/2T4R in which 2 SRS resource sets are configured.

For not supporting the antenna switching capability B,
for the antenna switching transmission mode xTyR, when y>4, this capability is not applicable; and
for the antenna switching transmission mode xTyR, when y<4, the number of configurations is not enhanced, that is, being configured according to the rule of Rel-15.

For 1T2R and 2T4R, maximum two SRS resource sets are configured, the resource types of the two SRS resource sets need to be different, and the impact of the number of periodic SRS resource sets and semi-persistent SRS resource sets needs to be considered;
for 1T1R, 2T2R, and 4T4R, maximum two SRS resource sets are configured, and the impact of the number of periodic SRS resource sets and semi-persistent SRS resource sets needs to be considered; and
for 1T4R, 0 or 2 aperiodic SRS resource sets are configured, and the impact of the number of periodic SRS resource sets and semi-persistent SRS resource sets is not considered.

At present, the terminal supports the antenna switching capability A and the antenna switching capability B, and is limited by the configuration of Rel-15 antenna switching. For the antenna switching type xTyR, when y<=4, the antenna switching capability A considers only the capability of enhancing the SRS period and the semi-persistent SRS, and the antenna switching capability B considers only the capability of enhancing the aperiodic SRS. When the antenna switching capability A or the antenna switching capability B is not supported, configuration limitation of the Rel-15 antenna switching is used, while the configuration limitation of the Rel-15 antenna switching considers all the number of periodic, semi-persistent, and aperiodic SRS resource sets. In this way, when the terminal does not support the antenna switching capability A or the antenna switching capability B, the network side and the terminal cannot obtain configuration limitations of different SRS resource types according to the existing protocol. If understanding of the two sides is inconsistent, when the number of resources configured by the network side exceeds the number of resources understood by the terminal, the terminal cannot determine whether the resources configured by the network side continue to be transmitted or ignore to be transmitted as a configuration error.

With reference to the accompanying drawings, the following describes in detail an SRS resource configuration method provided in the embodiments of this application by using some embodiments and application scenarios thereof.

An embodiment of this application provides an SRS resource configuration method, as shown in FIG. 2, and the method includes the following steps.

Step 101: A network side device receives a supported antenna switching capability for SRS reported by a terminal.

Step 102: The network side device determines, based on the antenna switching capability, the number of SRS resource sets configured for the terminal.

Step 103: The network side device sends SRS configuration information to the terminal, where the SRS configuration information indicates the number of the SRS resource sets.

In this embodiment of this application, the network side device determines, based on the supported antenna switching capability for SRS reported by the terminal, the number of SRS resource sets configured for the terminal, so that the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the antenna switching capability includes at least one of a first antenna switching capability (namely, antenna switching capability A) and a second antenna switching capability (namely, antenna switching capability B). The first antenna switching capability indicates that the terminal supports maximum N periodic SRS resource sets and maximum M semi-persistent SRS resource sets, and the second antenna switching capability indicates that the terminal supports maximum K aperiodic SRS resource sets. The determining, by the network side device based on the antenna switching capability, the number of SRS resource sets configured for the terminal includes at least one of the following:
in a case that the terminal reports supporting the first antenna switching capability, determining, based on the maximum number N of periodic SRS resource sets supported by the first antenna switching capability, the number of periodic SRS resource sets configured for the terminal, where N is an integer;
in a case that the terminal reports supporting the first antenna switching capability, determining, based on the maximum number M of semi-persistent SRS resource sets supported by the first antenna switching capability, the number of semi-persistent SRS resource sets configured for the terminal, where M is an integer; and
in a case that the terminal reports supporting the second antenna switching capability, determining, based on the maximum number K of aperiodic SRS resource sets supported by the second antenna switching capability, the number of aperiodic SRS resource sets configured for the terminal, where K is an integer.

In this way, no matter whether the terminal supports the first antenna switching capability, the second antenna switching capability, or both of the first antenna switching capability and the second antenna switching capability, the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

In some embodiments, if the terminal reports supporting the first antenna switching capability and not supporting the second antenna switching capability, the configuration quantity limitation of the periodic SRS resource set and the semi-persistent SRS resource set is obtained based on the first antenna switching capability, while the configuration quantity limitation of the aperiodic SRS resource set is obtained based on quantity configuration limitation of the antenna switching resource set in Rel-15. The network side device configures the SRS resource set for the terminal by using any one of the following first manners:
in a case that the terminal supports the antenna switching transmission mode of 1 transmit antenna and 2 receive antennas and/or the antenna switching transmission mode of 2 transmit antennas and 4 receive antennas, configuring maximum 2 semi-persistent SRS resource sets, maximum 1 periodic SRS resource set, and maximum 1 aperiodic SRS resource set for the terminal;
in a case that the terminal supports the antenna switching transmission mode of 1 transmit antenna and 4 receive antennas, configuring maximum 2 semi-persistent SRS resource sets, maximum 1 periodic SRS resource set, and 0 or 2 aperiodic SRS resource sets for the terminal; and
in a case that the terminal supports an antenna switching transmission mode in which the number of transmit antennas is equal to the number of receive antennas (including an antenna switching transmission mode of 1 transmit antenna and 1 receive antenna, an antenna switching transmission mode of 2 transmit antennas and 2 receive antennas and/or an antenna switching transmission mode of 4 transmit antennas and 4 receive antennas), configuring maximum 2 semi-persistent SRS resource sets, maximum 2 periodic SRS resource sets, and maximum 2 aperiodic SRS resource sets for the terminal.

In this way, in a case that the terminal supports the first antenna switching capability and does not support the second antenna switching capability, the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the terminal reports supporting the first antenna switching capability and not supporting the second antenna switching capability. When the first manner is used, in a case that the terminal supports the antenna switching transmission mode of 1 transmit antenna and 2 receive antennas and/or the antenna switching transmission mode of 2 transmit antennas and 4 receive antennas,
the network side device configures 2 semi-persistent SRS resource sets and maximum 4 SRS resource sets for the terminal; or
the network side device configures maximum 3 SRS resource sets for the terminal; or
the network side device configures maximum 4 SRS resource sets for the terminal.

In a specific example, in a case that the terminal supports the antenna switching transmission mode of 1 transmit antenna and 2 receive antennas and/or the antenna switching transmission mode of 2 transmit antennas and 4 receive antennas, the network side device supports configuring maximum 3 SRS resource sets for the terminal. In addition to simultaneously configuring maximum 2 semi-persistent SRS resource sets for the terminal, when a plurality of SRS resource sets are configured for the terminal, resource types of the configured SRS resource sets need to be different. The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set; and
1 periodic SRS resource set, 2 semi-persistent SRS resource sets, and 0 aperiodic SRS resource set.

Specifically, in a case that the terminal supports the antenna switching transmission mode of 1 transmit antenna and 2 receive antennas and/or the antenna switching transmission mode of 2 transmit antennas and 4 receive antennas, the network side device further supports configuring maximum 4 SRS resource sets for the terminal. In addition to simultaneously configuring maximum 2 semi-persistent SRS resource sets for the terminal, when a plurality of SRS resource sets are configured for the terminal, resource types of the configured SRS resource sets need to be different. In addition, only when 2 semi-persistent SRS resource sets are simultaneously configured for the terminal, it is supported to configure maximum 4 SRS resource sets for the terminal.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set;
1 periodic SRS resource set, 2 semi-persistent SRS resource sets, and 0 aperiodic SRS resource set; and
1 periodic SRS resource set, 2 semi-persistent SRS resource sets, and 1 aperiodic SRS resource set.

In some embodiments, the terminal reports supporting the first antenna switching capability and not supporting the second antenna switching capability. When the first manner is used, in a case that the terminal supports the antenna switching transmission mode of 1 transmit antenna and 4 receive antennas, the network side device supports configuring maximum 5 SRS resource sets for the terminal.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 2 aperiodic SRS resource sets;
0 periodic SRS resource set, 2 semi-persistent SRS resource sets, and 0 aperiodic SRS resource set;
0 periodic SRS resource set, 2 semi-persistent SRS resource sets, and 2 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set;
1 periodic SRS resource set, 1 semi-persistent SRS resource set, and 2 aperiodic SRS resource sets;
1 periodic SRS resource set, 2 semi-persistent SRS resource sets, and 0 aperiodic SRS resource set; and
1 periodic SRS resource set, 2 semi-persistent SRS resource sets, and 2 aperiodic SRS resource sets.

In some embodiments, the terminal reports supporting the first antenna switching capability and not supporting the second antenna switching capability. When the first manner is used,
in a specific example, in a case that the terminal supports an antenna switching transmission mode in which the number of transmit antennas is equal to the number of receive antennas (including an antenna switching transmission mode of 1 transmit antenna and 1 receive antenna, an antenna switching transmission mode of 2 transmit antennas and 2 receive antennas and/or an antenna switching transmission mode of 4 transmit antennas and 4 receive antennas), the network side device supports configuring maximum 3 SRS resource sets for the terminal; or only when the network side device configures 2 semi-persistent SRS resource sets for the terminal, it can be supported to configure maximum 3 SRS resource sets for the terminal; or only when the network side device configures at least 1 semi-persistent SRS resource set for the terminal, it can be supported to configure maximum 3 SRS resource sets for the terminal.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 1 semi-persistent SRS resource set, and 0 aperiodic SRS resource set;
1 periodic SRS resource set, 2 semi-persistent SRS resource sets, and 0 aperiodic SRS resource set; and
2 periodic SRS resource sets, 0 semi-persistent SRS resource set, and 0 aperiodic SRS resource set.

Only when the network side device configures 2 semi-persistent SRS resource sets for the terminal, it can be supported to configure maximum 3 SRS resource sets for the terminal. The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set;
1 periodic SRS resource set, 2 semi-persistent SRS resource sets, and 0 aperiodic SRS resource set; and
2 periodic SRS resource sets, 0 semi-persistent SRS resource set, and 0 aperiodic SRS resource set.

In some embodiments, if the terminal reports not supporting the first antenna switching capability and supporting the second antenna switching capability, the configuration quantity limitation of the aperiodic SRS resource set is obtained based on the second antenna switching capability, while the configuration quantity limitation of the periodic SRS resource set and the semi-persistent SRS resource set is obtained based on quantity configuration limitation of the antenna switching resource set in Rel-15. The network side device configures the SRS resource set for the terminal by using any one of the following second manners:
in a case that the terminal supports the antenna switching transmission mode of 1 transmit antenna and 2 receive antennas and/or the antenna switching transmission mode of 2 transmit antennas and 4 receive antennas, configuring maximum 1 semi-persistent SRS resource set, maximum 1 periodic SRS resource set, and maximum 2 aperiodic SRS resource sets for the terminal; and
in a case that the terminal supports the antenna switching transmission mode of 1 transmit antenna and 4 receive antennas, configuring maximum 1 semi-persistent SRS resource set, maximum 1 periodic SRS resource set, and 0, 2, or 4 aperiodic SRS resource sets for the terminal.

In this way, in a case that the terminal does not support the first antenna switching capability and supports the second antenna switching capability, the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the terminal reports not supporting the first antenna switching capability and supporting the second antenna switching capability, and when the second manner is used, in a case that the terminal supports the antenna switching transmission mode of 1 transmit antenna and 2 receive antennas and/or the antenna switching transmission mode of 2 transmit antennas and 4 receive antennas, the network side device configures the periodic SRS resource set and the semi-persistent SRS resource set for the terminal, and configures maximum 2 aperiodic SRS resource sets for the terminal.

In a specific example, in a case that the terminal supports the antenna switching transmission mode of 1 transmit antenna and 2 receive antennas and/or the antenna switching transmission mode of 2 transmit antennas and 4 receive antennas, the network side device supports configuring maximum 3 SRS resource sets for the terminal. In addition to simultaneously configuring maximum 2 aperiodic SRS resource sets for the terminal, when a plurality of SRS resource sets are configured for the terminal, resource types of the configured SRS resource sets need to be different.

In addition, when configuring both the periodic SRS resource set and the semi-persistent SRS resource set for the terminal, maximum 1 aperiodic SRS resource set is configured for the terminal.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set; and
1 periodic SRS resource set, 1 semi-persistent SRS resource set, and 1 aperiodic SRS resource set.

In another specific example, in a case that the terminal supports the antenna switching transmission mode of 1 transmit antenna and 2 receive antennas and/or the antenna switching transmission mode of 2 transmit antennas and 4 receive antennas, the network side device supports configuring maximum 4 SRS resource sets for the terminal. In addition to simultaneously configuring maximum 2 aperiodic SRS resource sets for the terminal, when a plurality of SRS resource sets are configured for the terminal, resource types of the configured SRS resource sets need to be different.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set; and
1 periodic SRS resource set, 1 semi-persistent SRS resource set, and 2 aperiodic SRS resource sets.

In some embodiments, the terminal reports not supporting the first antenna switching capability and supporting the second antenna switching capability. When the second manner is used, in a case that the terminal supports the antenna switching transmission mode of 1 transmit antenna and 4 receive antennas, the network side device supports configuring maximum 5 SRS resource sets for the terminal. The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 2 aperiodic SRS resource sets;
0 periodic SRS resource set, 0 semi-persistent SRS resource set, and 4 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 2 aperiodic SRS resource sets;
0 periodic SRS resource set, 1 semi-persistent SRS resource set, and 4 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 2 aperiodic SRS resource sets; and
1 periodic SRS resource set, 0 semi-persistent SRS resource set, and 4 aperiodic SRS resource sets.

In some embodiments, in a case that the terminal reports supporting the first antenna switching capability and the second antenna switching capability, and the terminal does not expect to configure the SRS resource set based on both the first antenna switching capability and the second antenna switching capability, the determining, by the network side device based on the antenna switching capability, the number of SRS resource sets configured for the terminal includes:
selecting, by the network side device according to a preset rule, the first manner or the second manner to configure the SRS resource set for the terminal, where the preset rule includes any one of the following:
selecting, based on indication of signaling, the first manner or the second manner to configure the SRS resource set for the terminal;
selecting, based on a configuration of the network side device, the first manner or the second manner to configure the SRS resource set for the terminal; randomly selecting the first manner or the second manner to configure the SRS resource set for the terminal;
selecting, based on an agreement in a protocol, the first manner or the second manner to configure the SRS resource set for the terminal;
selecting, based on priorities of the first antenna switching capability and the second antenna switching capability, the first manner or the second manner to configure the SRS resource set for the terminal; and
selecting, based on an identifier order of resources or resource sets in a second combination, the first manner or the second manner to configure the SRS resource set for the terminal, where the second combination is a union set of SRS resource sets supported by the first antenna switching capability and the second antenna switching capability.

Ignore or treat as an error the configuration combination of the configured capabilities that do not meet the selection.

In this embodiment, in a case that the terminal supports both the first antenna switching capability and the second antenna switching capability, but does not expect to configure the SRS resource set based on both the first antenna switching capability and the second antenna switching capability, the SRS resource set can be configured for the terminal according to a preset rule, so that the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

Further, only in a case that the terminal supports the antenna switching transmission mode of 1 transmit antenna and 2 receive antennas and/or the antenna switching transmission mode of 2 transmit antennas and 4 receive antennas, the first manner or the second manner is selected according to the preset rule to configure the SRS resource set for the terminal.

In some embodiments, the priority is reported by the terminal, and is configured by the network side device or specified by a protocol.

In some embodiments, in a case that the terminal reports supporting the first antenna switching capability and the second antenna switching capability, the determining, by the network side device based on the antenna switching capability, the number of SRS resource sets configured for the terminal includes:
in a case that the terminal supports the antenna switching transmission mode of 1 transmit antenna and 2 receive antennas and/or the antenna switching transmission mode of 2 transmit antennas and 4 receive antennas, configuring maximum 2 semi-persistent SRS resource sets, maximum 1 periodic SRS resource set, and maximum 2 aperiodic SRS resource sets for the terminal.

In this embodiment, in a case that the terminal supports both the first antenna switching capability and the second antenna switching capability, the SRS resource set can be configured for the terminal based on SRS resource configuration limitations of the first antenna switching capability and the second antenna switching capability, so that the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, in a case that the network side device configures 2 semi-persistent SRS resource sets for the terminal, 1 aperiodic SRS resource set or no aperiodic SRS resource set is configured for the terminal; or
in a case that the network side device configures 2 aperiodic SRS resource sets for the terminal, 1 semi-persistent SRS resource set or no semi-persistent SRS resource set is configured for the terminal; or
in a case that the network side device configures 2 semi-persistent SRS resource sets and 2 aperiodic SRS resource sets for the terminal, no periodic SRS resource set is configured for the terminal; or
in a case that the network side device configures 2 semi-persistent SRS resource sets and 2 aperiodic SRS resource sets for the terminal, maximum 5 SRS resource sets are configured for the terminal.

In a specific example, the network side device supports configuring maximum 4 SRS resource sets for the terminal. In addition to simultaneously configuring maximum 2 semi-persistent SRS resource sets and/or 2 aperiodic SRS resource sets for the terminal, when a plurality of SRS resource sets are configured for the terminal, resource types of the configured SRS resource sets need to be different.

Alternatively, the number of semi-persistent SRS resource sets and the number of aperiodic SRS resource sets cannot be simultaneously configured as 2.

Alternatively, when the number of semi-persistent SRS resource sets and the number of aperiodic SRS resource sets are simultaneously configured as 2, the terminal does not expect the network side device to configure the periodic SRS resource set.

In some embodiments, the number of semi-persistent SRS resource sets and the number of aperiodic SRS resource sets cannot be simultaneously configured as 2. The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set;
1 periodic SRS resource set, 1 semi-persistent SRS resource set, and 2 aperiodic SRS resource sets;
1 periodic SRS resource set, 2 semi-persistent SRS resource sets, and 0 aperiodic SRS resource set; and
1 periodic SRS resource set, 2 semi-persistent SRS resource sets, and 1 aperiodic SRS resource set.

In some embodiments, when the number of semi-persistent SRS resource sets and the number of aperiodic SRS resource sets are simultaneously configured as 2, the terminal does not expect the network side device to configure the periodic SRS resource set. The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
0 periodic SRS resource set, 2 semi-persistent SRS resource sets, and 2 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set;
1 periodic SRS resource set, 1 semi-persistent SRS resource set, and 2 aperiodic SRS resource sets;
1 periodic SRS resource set, 2 semi-persistent SRS resource sets, and 0 aperiodic SRS resource set; and
1 periodic SRS resource set, 2 semi-persistent SRS resource sets, and 1 aperiodic SRS resource set. In another specific example, the network side device supports configuring maximum 5 SRS resource sets for the terminal.

In addition to simultaneously configuring maximum 2 semi-persistent SRS resource sets and/or 2 aperiodic SRS resource sets for the terminal, when a plurality of SRS resource sets are configured for the terminal, resource types of the configured SRS resource sets need to be different.

Alternatively, only when 2 semi-persistent SRS resource sets and 2 aperiodic SRS resource sets are simultaneously configured for the terminal, it is supported to configure maximum 5 SRS resource sets for the terminal.

The SRS resource set configured by the network side device for the terminal is selected from a first combination, and the first combination includes at least one of the following:
0 periodic SRS resource set, 0 semi-persistent SRS resource set, and 0 aperiodic SRS resource set;
0 periodic SRS resource set, 0 semi-persistent SRS resource set, and 1 aperiodic SRS resource set;
0 periodic SRS resource set, 0 semi-persistent SRS resource set, and 2 aperiodic SRS resource sets;
0 periodic SRS resource set, 1 semi-persistent SRS resource set, and 0 aperiodic SRS resource set;
0 periodic SRS resource set, 1 semi-persistent SRS resource set, and 1 aperiodic SRS resource set;
0 periodic SRS resource set, 1 semi-persistent SRS resource set, and 2 aperiodic SRS resource sets;
0 periodic SRS resource set, 2 semi-persistent SRS resource sets, and 0 aperiodic SRS resource set;
0 periodic SRS resource set, 2 semi-persistent SRS resource sets, and 1 aperiodic SRS resource set;
0 periodic SRS resource set, 2 semi-persistent SRS resource sets, and 2 aperiodic SRS resource sets;
1 periodic SRS resource set, 0 semi-persistent SRS resource set, and 0 aperiodic SRS resource set;
1 periodic SRS resource set, 0 semi-persistent SRS resource set, and 1 aperiodic SRS resource set;
1 periodic SRS resource set, 0 semi-persistent SRS resource set, and 2 aperiodic SRS resource sets;
1 periodic SRS resource set, 1 semi-persistent SRS resource set, and 0 aperiodic SRS resource set;
1 periodic SRS resource set, 1 semi-persistent SRS resource set, and 1 aperiodic SRS resource set;
1 periodic SRS resource set, 1 semi-persistent SRS resource set, and 2 aperiodic SRS resource sets;
1 periodic SRS resource set, 2 semi-persistent SRS resource sets, and 0 aperiodic SRS resource set;
1 periodic SRS resource set, 2 semi-persistent SRS resource sets, and 1 aperiodic SRS resource set; and
1 periodic SRS resource set, 2 semi-persistent SRS resource sets, and 2 aperiodic SRS resource sets.

It can be seen that in the foregoing embodiment, the network side device configures a plurality of SRS resource sets for the terminal, and resource types of the plurality of SRS resource sets are not exactly the same.

In the foregoing embodiment, when configuring the SRS resource set for the terminal, the network side device needs to meet the number limitation of the first combination on the SRS resource set.

An embodiment of this application further provides an SRS resource configuration method, as shown in FIG. 3, and the method includes the following steps.

Step 201: A terminal reports a supported antenna switching capability for SRS to a network side device.

Step 202: The terminal receives SRS configuration information of the network side device, where the SRS configuration information indicates the number of SRS resource sets configured by the network side device for the terminal based on the antenna switching capability.

In this embodiment of this application, the network side device determines, based on the supported antenna switching capability for SRS reported by the terminal, the number of SRS resource sets configured for the terminal, so that the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the antenna switching capability includes a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets;
in a case that the terminal reports supporting the first antenna switching capability, the number of periodic SRS resource sets configured for the terminal is determined based on the maximum number N of periodic SRS resource sets supported by the first antenna switching capability, and N is an integer;
in a case that the terminal reports supporting the first antenna switching capability, the number of semi-persistent SRS resource sets configured for the terminal is determined based on the maximum number M of semi-persistent SRS resource sets supported by the first antenna switching capability, and M is an integer; and
in a case that the terminal reports supporting the second antenna switching capability, the number of aperiodic SRS resource sets configured for the terminal is determined based on the maximum number K of aperiodic SRS resource sets supported by the second antenna switching capability, and K is an integer.

In this way, no matter whether the terminal supports the first antenna switching capability, the second antenna switching capability, or both of the first antenna switching capability and the second antenna switching capability, the network side device and the terminal can have the same understanding for the antenna switching capability reported by the terminal, preventing the number of SRS resource sets configured by the network side device from exceeding the antenna switching capability supported by the terminal, and ensuring that the configured SRS resources can be sent and received normally.

In some embodiments, the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

The SRS resource configuration method provided in this embodiment of this application may be executed by the SRS resource configuration apparatus. In this embodiment of this application, that the SRS resource configuration apparatus performs the SRS resource configuration method is used as an example to describe the SRS resource configuration apparatus provided in this embodiment of this application.

An embodiment of this application provides an SRS resource configuration apparatus, applied to a network side device. The apparatus includes:
a receiving module, configured to receive a supported antenna switching capability for SRS reported by a terminal;
a processing module, configured to determine, based on the antenna switching capability, the number of SRS resource sets configured for the terminal; and
a sending module, configured to send SRS configuration information to the terminal, where the SRS configuration information indicates the number of the SRS resource sets.

In some embodiments, the antenna switching capability includes at least one of a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets; and
the processing module is specifically configured to perform at least one of the following:
in a case that the terminal reports supporting the first antenna switching capability, determining, based on the maximum number N of periodic SRS resource sets supported by the first antenna switching capability, the number of periodic SRS resource sets configured for the terminal, where N is an integer;
in a case that the terminal reports supporting the first antenna switching capability, determining, based on the maximum number M of semi-persistent SRS resource sets supported by the first antenna switching capability, the number of semi-persistent SRS resource sets configured for the terminal, where M is an integer; and
in a case that the terminal reports supporting the second antenna switching capability, determining, based on the maximum number K of aperiodic SRS resource sets supported by the second antenna switching capability, the number of aperiodic SRS resource sets configured for the terminal, where K is an integer.

In some embodiments, the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

In some embodiments, in a case that the terminal reports supporting the first antenna switching capability and not supporting the second antenna switching capability, the processing module is configured to configure the SRS resource set for the terminal by using any one of the following first manners:
in a case that the terminal supports the antenna switching transmission mode of 1 transmit antenna and 2 receive antennas and/or the antenna switching transmission mode of 2 transmit antennas and 4 receive antennas, configuring maximum 2 semi-persistent SRS resource sets, maximum 1 periodic SRS resource set, and maximum 1 aperiodic SRS resource set for the terminal;
in a case that the terminal supports the antenna switching transmission mode of 1 transmit antenna and 4 receive antennas, configuring maximum 2 semi-persistent SRS resource sets, maximum 1 periodic SRS resource set, and 0 or 2 aperiodic SRS resource sets for the terminal; and
in a case that the terminal supports an antenna switching transmission mode in which the number of transmit antennas is equal to the number of receive antennas (including an antenna switching transmission mode of 1 transmit antenna and 1 receive antenna, an antenna switching transmission mode of 2 transmit antennas and 2 receive antennas and/or an antenna switching transmission mode of 4 transmit antennas and 4 receive antennas), configuring maximum 2 semi-persistent SRS resource sets, maximum 2 periodic SRS resource sets, and maximum 2 aperiodic SRS resource sets for the terminal; and
in a case that the terminal does not support the first antenna switching capability and supports the second antenna switching capability, the processing module is configured to configure the SRS resource set for the terminal by using any one of the following second manners:
   in a case that the terminal supports the antenna switching transmission mode of 1 transmit antenna and 2 receive antennas and/or the antenna switching transmission mode of 2 transmit antennas and 4 receive antennas, configuring maximum 1 semi-persistent SRS resource set, maximum 1 periodic SRS resource set, and maximum 2 aperiodic SRS resource sets for the terminal; and
   in a case that the terminal supports the antenna switching transmission mode of 1 transmit antenna and 4 receive antennas, configuring maximum 1 semi-persistent SRS resource set, maximum 1 periodic SRS resource set, and 0, 2, or 4 aperiodic SRS resource sets for the terminal.

In some embodiments, when the first manner is used, in a case that the terminal supports the antenna switching transmission mode of 1 transmit antenna and 2 receive antennas and/or the antenna switching transmission mode of 2 transmit antennas and 4 receive antennas,
the processing module is configured to configure 2 semi-persistent SRS resource sets and maximum 4 SRS resource sets for the terminal; or
the processing module is configured to configure maximum 3 SRS resource sets for the terminal; or
the processing module is configured to configure maximum 4 SRS resource sets for the terminal.

In some embodiments, the SRS resource set configured by the processing module for the terminal is selected from a first combination, and the first combination includes at least one of the following:
1 aperiodic SRS resource set;
1 semi-persistent SRS resource set;
1 semi-persistent SRS resource set and 1 aperiodic SRS resource set;
2 semi-persistent SRS resource sets;
2 semi-persistent SRS resource sets and 1 aperiodic SRS resource set;
1 periodic SRS resource set;
1 periodic SRS resource set and 1 aperiodic SRS resource set;
1 periodic SRS resource set and 1 semi-persistent SRS resource set;
1 periodic SRS resource set, 1 semi-persistent SRS resource set, and 1 aperiodic SRS resource set;
1 periodic SRS resource set and 2 semi-persistent SRS resource sets; and
1 periodic SRS resource set, 2 semi-persistent SRS resource sets, and 1 aperiodic SRS resource set.

In some embodiments, when the first manner is used, in a case that the terminal supports an antenna switching transmission mode in which the number of transmit antennas is equal to the number of receive antennas (including an antenna switching transmission mode of 1 transmit antenna and 1 receive antenna, an antenna switching transmission mode of 2 transmit antennas and 2 receive antennas and/or an antenna switching transmission mode of 4 transmit antennas and 4 receive antennas),
the processing module is configured to configure maximum 3 SRS resource sets for the terminal; or
the processing module is configured to configure 2 semi-persistent SRS resource sets for the terminal, and the network side device configures maximum 3 SRS resource sets for the terminal; or
the processing module is configured to configure at least 1 semi-persistent SRS resource set for the terminal, and the network side device configures maximum 3 SRS resource sets for the terminal.

In some embodiments, the SRS resource set configured by the processing module for the terminal is selected from a first combination, and the first combination includes at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
2 semi-persistent SRS resource sets;
2 semi-persistent SRS resource sets and 1 aperiodic SRS resource set;
1 periodic SRS resource set;
1 periodic SRS resource set and 1 aperiodic SRS resource set;
1 periodic SRS resource set and 1 semi-persistent SRS resource set;
1 periodic SRS resource set, 1 semi-persistent SRS resource set, and 1 aperiodic SRS resource set;
1 periodic SRS resource set and 2 semi-persistent SRS resource sets; and
2 periodic SRS resource sets.

In some embodiments, when the second manner is used, in a case that the terminal supports the antenna switching transmission mode of 1 transmit antenna and 2 receive antennas and/or the antenna switching transmission mode of 2 transmit antennas and 4 receive antennas, the processing module is configured to: configure the periodic SRS resource set and the semi-persistent SRS resource set for the terminal, and configure maximum 2 aperiodic SRS resource sets for the terminal.

In some embodiments, the processing module is configured to configure maximum 3 SRS resource sets for the terminal; or
the processing module is configured to configure maximum 4 SRS resource sets for the terminal; or
the processing module is configured to configure maximum 2 aperiodic SRS resource sets for the terminal, and the network side device configures maximum 3 SRS resource sets for the terminal; or
the processing module is configured to configure maximum 2 aperiodic SRS resource sets for the terminal, and the network side device configures maximum 4 SRS resource sets for the terminal.

In some embodiments, the SRS resource set configured by the processing module for the terminal is selected from a first combination, and the first combination includes at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
1 periodic SRS resource set;
1 periodic SRS resource set and 1 aperiodic SRS resource set;
1 periodic SRS resource set and 2 aperiodic SRS resource sets;
1 periodic SRS resource set and 1 semi-persistent SRS resource set;
1 periodic SRS resource set, 1 semi-persistent SRS resource set, and 1 aperiodic SRS resource set; and
1 periodic SRS resource set, 1 semi-persistent SRS resource set, and 2 aperiodic SRS resource sets.

In some embodiments, in a case that the terminal reports supporting the first antenna switching capability and the second antenna switching capability, and the terminal does not expect to configure the SRS resource set based on both the first antenna switching capability and the second antenna switching capability, the processing module is configured to select, according to a preset rule, the first manner or the second manner to configure the SRS resource set for the terminal, where the preset rule includes any one of the following:
selecting, based on indication of signaling, the first manner or the second manner to configure the SRS resource set for the terminal;
selecting, based on a configuration of the network side device, the first manner or the second manner to configure the SRS resource set for the terminal; randomly selecting the first manner or the second manner to configure the SRS resource set for the terminal;
selecting, based on an agreement in a protocol, the first manner or the second manner to configure the SRS resource set for the terminal;
selecting, based on priorities of the first antenna switching capability and the second antenna switching capability, the first manner or the second manner to configure the SRS resource set for the terminal; and
selecting, based on an identifier order of resources or resource sets in a second combination, the first manner or the second manner to configure the SRS resource set for the terminal, where the second combination is a union set of SRS resource sets supported by the first antenna switching capability and the second antenna switching capability.

In some embodiments, in a case that the terminal supports the antenna switching transmission mode of 1 transmit antenna and 2 receive antennas and/or the antenna switching transmission mode of 2 transmit antennas and 4 receive antennas, the processing module is configured to select, according to the preset rule, the first manner or the second manner to configure the SRS resource set for the terminal.

In some embodiments, the priority is reported by the terminal, and is configured by the network side device or specified by a protocol.

In some embodiments, the terminal reports supporting the first antenna switching capability and the second antenna switching capability. The processing module is configured to: in a case that the terminal supports the antenna switching transmission mode of 1 transmit antenna and 2 receive antennas and/or the antenna switching transmission mode of 2 transmit antennas and 4 receive antennas, configure maximum 2 semi-persistent SRS resource sets, maximum 1 periodic SRS resource set, and maximum 2 aperiodic SRS resource sets for the terminal.

In some embodiments, in a case that the network side device configures 2 semi-persistent SRS resource sets for the terminal, 1 aperiodic SRS resource set or no aperiodic SRS resource set is configured for the terminal; or
in a case that the network side device configures 2 aperiodic SRS resource sets for the terminal, 1 semi-persistent SRS resource set or no semi-persistent SRS resource set is configured for the terminal; or
in a case that the network side device configures 2 semi-persistent SRS resource sets and 2 aperiodic SRS resource sets for the terminal, no periodic SRS resource set is configured for the terminal; or
in a case that the network side device configures 2 semi-persistent SRS resource sets and 2 aperiodic SRS resource sets for the terminal, maximum 5 SRS resource sets are configured for the terminal.

In some embodiments, the SRS resource set configured by the processing module for the terminal is selected from a first combination, and the first combination includes at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
2 semi-persistent SRS resource sets;
2 semi-persistent SRS resource sets and 1 aperiodic SRS resource set;
2 semi-persistent SRS resource sets and 2 aperiodic SRS resource sets;
1 periodic SRS resource set;
1 periodic SRS resource set and 1 aperiodic SRS resource set;
1 periodic SRS resource set and 2 aperiodic SRS resource sets;
1 periodic SRS resource set and 1 semi-persistent SRS resource set;
1 periodic SRS resource set, 1 semi-persistent SRS resource set, and 1 aperiodic SRS resource set;
1 periodic SRS resource set, 1 semi-persistent SRS resource set, and 2 aperiodic SRS resource sets;
1 periodic SRS resource set and 2 semi-persistent SRS resource sets;
1 periodic SRS resource set, 2 semi-persistent SRS resource sets, and 1 aperiodic SRS resource set; and
1 periodic SRS resource set, 2 semi-persistent SRS resource sets, and 2 aperiodic SRS resource sets.

In some embodiments, the processing module is configured to configure a plurality of SRS resource sets for the terminal, and resource types of the plurality of SRS resource sets are not exactly the same.

An embodiment of this application further provides an SRS resource configuration apparatus, applied to a terminal. The apparatus includes:
a reporting module, configured to report a supported antenna switching capability for SRS to a network side device; and
a receiving module, configured to receive SRS configuration information of the network side device, where the SRS configuration information indicates the number of SRS resource sets configured by the network side device for the terminal based on the antenna switching capability.

In some embodiments, the antenna switching capability includes a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets;
in a case that the terminal reports supporting the first antenna switching capability, the number of periodic SRS resource sets configured for the terminal is determined based on the maximum number N of periodic SRS resource sets supported by the first antenna switching capability, and N is an integer;
in a case that the terminal reports supporting the first antenna switching capability, the number of semi-persistent SRS resource sets configured for the terminal is determined based on the maximum number M of semi-persistent SRS resource sets supported by the first antenna switching capability, and M is an integer; and
in a case that the terminal reports supporting the second antenna switching capability, the number of aperiodic SRS resource sets configured for the terminal is determined based on the maximum number K of aperiodic SRS resource sets supported by the second antenna switching capability, and K is an integer.

In some embodiments, the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

The SRS resource configuration apparatus in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), and the like. This is not specifically limited in this embodiment of this application.

The SRS resource configuration apparatus provided in this embodiment of this application can implement the processes implemented in the method embodiments in FIG. 2 to FIG. 3, with same technical effect achieved. To avoid repetition, details are not described herein again.

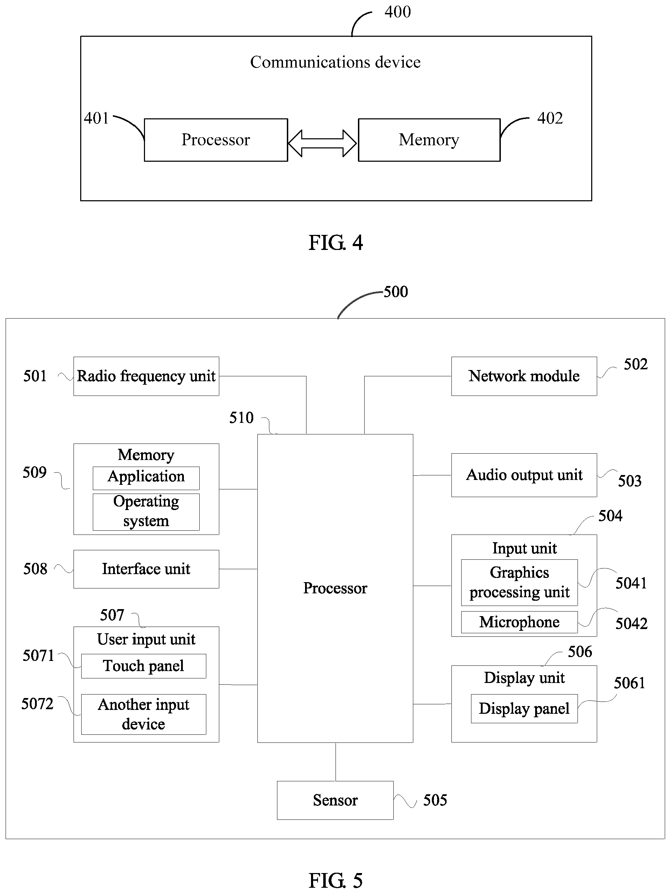

Optionally, as shown in FIG. 4, an embodiment of this application further provides a communications device 400, including a processor 401 and a memory 402. The memory 402 stores a program or an instruction that can be run on the processor 401. For example, when the communications device 400 is a terminal, the program or the instruction is executed by the processor 401 to implement steps of the embodiment of the foregoing SRS resource configuration method at a terminal side, and a same technical effect can be achieved. In a case that the communications device 400 is a network side device, when the program or the instruction is executed by the processor 401, steps of the embodiment of the foregoing SRS resource configuration method at a network side device side are implemented, and a same technical effect can be achieved. To avoid repetition, details are not described herein again.

An embodiment of this application further provides a terminal, including a processor and a communications interface, where the communications interface is configured to: report a supported antenna switching capability for SRS to a network side device; and receive SRS configuration information of the network side device, where the SRS configuration information indicates the number of SRS resource sets configured by the network side device for the terminal based on the antenna switching capability. The terminal embodiment is corresponding to the terminal side method embodiment, each implementation process and implementation of the method embodiment can be applied to the terminal embodiment, and a same technical effect can be achieved. Specifically, FIG. 5 is a schematic diagram of a hardware structure of a terminal according to an embodiment of this application.

A terminal 500 includes but is not limited to at least a part of components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (such as a battery) that supplies power to each component. The power supply may be logically connected to the processor 510 through a power management system, to implement functions such as charging and discharging management, and power consumption management by using the power management system. The structure of the terminal shown in FIG. 5 constitutes no limitation on the terminal. The terminal may include more or fewer components than those shown in the figure, combine some components, or have different component arrangements. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video obtained by an image capture apparatus (for example, a camera) in a video capture mode or an image capture mode. The display unit 506 may include a display panel 5061. The display panel 5061 may be configured in a form such as a liquid crystal display or an organic light-emitting diode. The user input unit 507 includes at least one of a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 501 may transmit the downlink data to the processor 510 for processing. In addition, the radio frequency unit 501 may send uplink data to the network side device. Generally, the radio frequency unit 501 includes but is not limited to an antenna, an amplifier, a transceiver, a coupler, a low noise amplifier, a duplexer, and the like.

The memory 509 may be configured to store a software program or an instruction and various data. The memory 509 may mainly include a first storage area for storing a program or an instruction and a second storage area for storing data. The first storage area may store an operating system, and an application or an instruction required by at least one function (for example, a sound playing function or an image playing function). In addition, the memory 509 may be a volatile memory or a non-volatile memory, or the memory 509 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 509 in this embodiment of this application includes but is not limited to these memories and any memory of another proper type.

The processor 510 may include one or more processing units. Optionally, an application processor and a modem processor are integrated into the processor 510. The application processor mainly processes an operating system, a user interface, an application, or the like. The modem processor mainly processes a wireless communication signal, for example, a baseband processor. It may be understood that the modem processor may alternatively not be integrated into the processor 510.

The radio frequency unit 501 is configured to report a supported antenna switching capability for SRS to a network side device; and receive SRS configuration information of the network side device, where the SRS configuration information indicates the number of SRS resource sets configured by the network side device for the terminal based on the antenna switching capability.

In some embodiments, the antenna switching capability includes a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets;
in a case that the terminal reports supporting the first antenna switching capability, the number of periodic SRS resource sets configured for the terminal is determined based on the maximum number N of periodic SRS resource sets supported by the first antenna switching capability, and N is an integer;
in a case that the terminal reports supporting the first antenna switching capability, the number of semi-persistent SRS resource sets configured for the terminal is determined based on the maximum number M of semi-persistent SRS resource sets supported by the first antenna switching capability, and M is an integer; and
in a case that the terminal reports supporting the second antenna switching capability, the number of aperiodic SRS resource sets configured for the terminal is determined based on the maximum number K of aperiodic SRS resource sets supported by the second antenna switching capability, and K is an integer.

In some embodiments, the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

An embodiment of this application further provides a network side device, including a processor and a communications interface, where the processor is configured to determine, based on the antenna switching capability, the number of SRS resource sets configured for the terminal; and the communications interface is configured to receive a supported antenna switching capability for SRS reported by a terminal; and send SRS configuration information to the terminal, where the SRS configuration information indicates the number of SRS resource sets. This network side device embodiment is corresponding to the foregoing method embodiment of the network side device. Each implementation process and implementation of the foregoing method embodiment may be applicable to this network side device embodiment, and a same technical effect can be achieved.

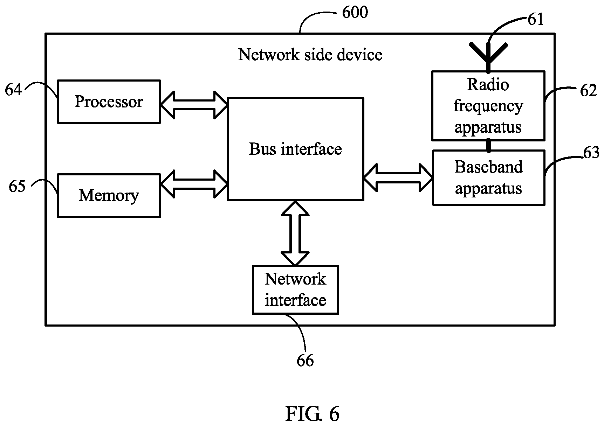

Specifically, an embodiment of this application further provides a network side device. As shown in FIG. 6, the network side device 600 includes an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information through the antenna 61, and sends the received information to the baseband apparatus 63 for processing. In a downlink direction, the baseband apparatus 63 processes information that needs to be sent, and sends processed information to the radio frequency apparatus 62. The radio frequency apparatus 62 processes the received information, and then sends processed information through the antenna 61.

In the foregoing embodiment, the method performed by the network side device may be implemented in a baseband apparatus 63. The baseband apparatus 63 includes a baseband processor.

For example, the baseband apparatus 63 may include at least one baseband board. A plurality of chips are disposed on the baseband board. As shown in FIG. 6, one chip is, for example, a baseband processor, and is connected to the memory 65 by using a bus interface, to invoke a program in the memory 65 to perform the operations of the network device shown in the foregoing method embodiment.

The network side device may further include a network interface 66, and the interface is, for example, a common public radio interface (common public radio interface, CPRI).

Specifically, the network side device 600 in this embodiment of the present invention further includes an instruction or a program that is stored in the memory 65 and that can be run on the processor 64. The processor 64 invokes the instruction or the program in the memory 65 to perform the method performed by the modules shown in FIG. 6, and a same technical effect is achieved. To avoid repetition, details are not described herein again.

An embodiment of this application further provides a readable storage medium. The readable storage medium stores a program or an instruction, and when the program or the instruction is executed by a processor, the processes of the SRS resource configuration method embodiment are implemented and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communications interface, the communications interface is coupled to the processor, and the processor is configured to run a program or an instruction to implement the processes of the SRS resource configuration method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement the processes of the SRS resource configuration method embodiment, and a same technical effect can be achieved. To avoid repetition, details are not described herein again.

An embodiment of this application further provides an SRS resource configuration system, including a terminal and a network side device, where the terminal may be configured to perform steps of the foregoing SRS resource configuration method at a terminal side, and the network side device may be configured to perform steps of the foregoing SRS resource configuration method at a network side device side.

An embodiment of this application further provides a communications device. The communications device is configured to execute the processes of the SRS resource configuration method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by a statement "includes a..." does not preclude the presence of additional identical elements in the process, method, article, or apparatus that includes the element. In addition, it should be noted that the scope of the method and apparatus in the implementations of this application is not limited to performing functions in an illustrated or discussed sequence, and may further include performing the functions in a basically simultaneous manner or in a reverse sequence based on the functions concerned. For example, the described method may be performed in an order different from the described order, and steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A sounding reference signal (SRS) resource configuration method, comprising:
receiving, by a network side device, a supported antenna switching capability for SRS reported by a terminal;
determining, by the network side device based on the antenna switching capability, the number of SRS resource sets configured for the terminal; and
sending, by the network side device, SRS configuration information to the terminal, wherein the SRS configuration information indicates the number of the SRS resource sets.

2. The SRS resource configuration method according to claim 1, wherein the antenna switching capability comprises at least one of a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets.

3. The SRS resource configuration method according to claim 2, wherein the determining, by the network side device based on the antenna switching capability, the number of SRS resource sets configured for the terminal comprises at least one of the following:
in a case that the terminal reports supporting the first antenna switching capability, determining, based on the maximum number N of periodic SRS resource sets supported by the first antenna switching capability, the number of periodic SRS resource sets configured for the terminal, wherein N is an integer;
in a case that the terminal reports supporting the first antenna switching capability, determining, based on the maximum number M of semi-persistent SRS resource sets supported by the first antenna switching capability, the number of semi-persistent SRS resource sets configured for the terminal, wherein M is an integer; and
in a case that the terminal reports supporting the second antenna switching capability, determining, based on the maximum number K of aperiodic SRS resource sets supported by the second antenna switching capability, the number of aperiodic SRS resource sets configured for the terminal, wherein K is an integer.

4. The SRS resource configuration method according to claim 2 or 3, wherein the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

5. The SRS resource configuration method according to claim 4, wherein in a case that the terminal reports supporting the first antenna switching capability and not supporting the second antenna switching capability, the network side device configures the SRS resource set for the terminal by using any one of the following first manners:
in a case that the terminal supports the antenna switching transmission mode of 1 transmit antenna and 2 receive antennas and/or the antenna switching transmission mode of 2 transmit antennas and 4 receive antennas, configuring maximum 2 semi-persistent SRS resource sets, maximum 1 periodic SRS resource set, and maximum 1 aperiodic SRS resource set for the terminal;
in a case that the terminal supports the antenna switching transmission mode of 1 transmit antenna and 4 receive antennas, configuring maximum 2 semi-persistent SRS resource sets, maximum 1 periodic SRS resource set, and 0 or 2 aperiodic SRS resource sets for the terminal; and
in a case that the terminal supports an antenna switching transmission mode in which the number of transmit antennas is equal to the number of receive antennas, configuring maximum 2 semi-persistent SRS resource sets, maximum 2 periodic SRS resource sets, and maximum 2 aperiodic SRS resource sets for the terminal; and
in a case that the terminal does not support the first antenna switching capability and supports the second antenna switching capability, the SRS resource set is configured for the terminal by using any one of the following second manners:
in a case that the terminal supports the antenna switching transmission mode of 1 transmit antenna and 2 receive antennas and/or the antenna switching transmission mode of 2 transmit antennas and 4 receive antennas, configuring maximum 1 semi-persistent SRS resource set, maximum 1 periodic SRS resource set, and maximum 2 aperiodic SRS resource sets for the terminal; and
in a case that the terminal supports the antenna switching transmission mode of 1 transmit antenna and 4 receive antennas, configuring maximum 1 semi-persistent SRS resource set, maximum 1 periodic SRS resource set, and 0, 2, or 4 aperiodic SRS resource sets for the terminal.

6. The SRS resource configuration method according to claim 5, wherein when the first manner is used, in a case that the terminal supports the antenna switching transmission mode of 1 transmit antenna and 2 receive antennas and/or the antenna switching transmission mode of 2 transmit antennas and 4 receive antennas,
the network side device configures 2 semi-persistent SRS resource sets and maximum 4 SRS resource sets for the terminal; or
the network side device configures maximum 3 SRS resource sets for the terminal; or
the network side device configures maximum 4 SRS resource sets for the terminal.

7. The SRS resource configuration method according to claim 6, wherein the SRS resource set configured by the network side device for the terminal is selected from a first combination, and the first combination comprises at least one of the following:
1 aperiodic SRS resource set;
1 semi-persistent SRS resource set;
1 semi-persistent SRS resource set and 1 aperiodic SRS resource set;
2 semi-persistent SRS resource sets;
2 semi-persistent SRS resource sets and 1 aperiodic SRS resource set;
1 periodic SRS resource set;
1 periodic SRS resource set and 1 aperiodic SRS resource set;
1 periodic SRS resource set and 1 semi-persistent SRS resource set;
1 periodic SRS resource set, 1 semi-persistent SRS resource set, and 1 aperiodic SRS resource set;
1 periodic SRS resource set and 2 semi-persistent SRS resource sets; and
1 periodic SRS resource set, 2 semi-persistent SRS resource sets, and 1 aperiodic SRS resource set.

8. The SRS resource configuration method according to claim 5, wherein when the first manner is used, in a case that the terminal supports an antenna switching transmission mode in which the number of transmit antennas is equal to the number of receive antennas,
the network side device configures maximum 3 SRS resource sets for the terminal; or
the network side device configures 2 semi-persistent SRS resource sets and maximum 3 SRS resource sets for the terminal; or
the network side device configures at least 1 semi-persistent SRS resource set and maximum 3 SRS resource sets for the terminal.

9. The SRS resource configuration method according to claim 8, wherein the SRS resource set configured by the network side device for the terminal is selected from a first combination, and the first combination comprises at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
2 semi-persistent SRS resource sets;
2 semi-persistent SRS resource sets and 1 aperiodic SRS resource set;
1 periodic SRS resource set;
1 periodic SRS resource set and 1 aperiodic SRS resource set;
1 periodic SRS resource set and 1 semi-persistent SRS resource set;
1 periodic SRS resource set, 1 semi-persistent SRS resource set, and 1 aperiodic SRS resource set;
1 periodic SRS resource set and 2 semi-persistent SRS resource sets; and
2 periodic SRS resource sets.

10. The SRS resource configuration method according to claim 5, wherein when the second manner is used, in a case that the terminal supports the antenna switching transmission mode of 1 transmit antenna and 2 receive antennas and/or the antenna switching transmission mode of 2 transmit antennas and 4 receive antennas, the network side device configures the periodic SRS resource set and the semi-persistent SRS resource set for the terminal, and configures maximum 2 aperiodic SRS resource sets for the terminal.

11. The SRS resource configuration method according to claim 5, wherein
the network side device configures maximum 3 SRS resource sets for the terminal; or
the network side device configures maximum 4 SRS resource sets for the terminal; or
the network side device configures maximum 2 aperiodic SRS resource sets and maximum 3 SRS resource sets for the terminal; or
the network side device configures maximum 2 aperiodic SRS resource sets and maximum 4 SRS resource sets for the terminal.

12. The SRS resource configuration method according to claim 10, wherein the SRS resource set configured by the network side device for the terminal is selected from a first combination, and the first combination comprises at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
1 periodic SRS resource set;
1 periodic SRS resource set and 1 aperiodic SRS resource set;
1 periodic SRS resource set and 2 aperiodic SRS resource sets;
1 periodic SRS resource set and 1 semi-persistent SRS resource set;
1 periodic SRS resource set, 1 semi-persistent SRS resource set, and 1 aperiodic SRS resource set; and
1 periodic SRS resource set, 1 semi-persistent SRS resource set, and 2 aperiodic SRS resource sets.

13. The SRS resource configuration method according to claim 5, wherein in a case that the terminal reports supporting the first antenna switching capability and the second antenna switching capability, and the terminal does not expect to configure the SRS resource set based on both the first antenna switching capability and the second antenna switching capability, the determining, by the network side device based on the antenna switching capability, the number of SRS resource sets configured for the terminal comprises:
selecting, by the network side device according to a preset rule, the first manner or the second manner to configure the SRS resource set for the terminal, wherein the preset rule comprises any one of the following:
selecting, based on indication of signaling, the first manner or the second manner to configure the SRS resource set for the terminal;
selecting, based on a configuration of the network side device, the first manner or the second manner to configure the SRS resource set for the terminal; randomly selecting the first manner or the second manner to configure the SRS resource set for the terminal;
selecting, based on an agreement in a protocol, the first manner or the second manner to configure the SRS resource set for the terminal;
selecting, based on priorities of the first antenna switching capability and the second antenna switching capability, the first manner or the second manner to configure the SRS resource set for the terminal; and
selecting, based on an identifier order of resources or resource sets in a second combination, the first manner or the second manner to configure the SRS resource set for the terminal, wherein the second combination is a union set of SRS resource sets supported by the first antenna switching capability and the second antenna switching capability.

14. The SRS resource configuration method according to claim 13, wherein
in a case that the terminal supports the antenna switching transmission mode of 1 transmit antenna and 2 receive antennas and/or the antenna switching transmission mode of 2 transmit antennas and 4 receive antennas, the first manner or the second manner is selected according to the preset rule to configure the SRS resource set for the terminal.

15. The SRS resource configuration method according to claim 13, wherein the priority is reported by the terminal, and is configured by the network side device or specified by a protocol.

16. The SRS resource configuration method according to claim 4, wherein in a case that the terminal reports supporting the first antenna switching capability and the second antenna switching capability, the determining, by the network side device based on the antenna switching capability, the number of SRS resource sets configured for the terminal comprises:
in a case that the terminal supports the antenna switching transmission mode of 1 transmit antenna and 2 receive antennas and/or the antenna switching transmission mode of 2 transmit antennas and 4 receive antennas, configuring maximum 2 semi-persistent SRS resource sets, maximum 1 periodic SRS resource set, and maximum 2 aperiodic SRS resource sets for the terminal.

17. The SRS resource configuration method according to claim 16, wherein in a case that the network side device configures 2 semi-persistent SRS resource sets for the terminal, 1 aperiodic SRS resource set or no aperiodic SRS resource set is configured for the terminal; or
in a case that the network side device configures 2 aperiodic SRS resource sets for the terminal, 1 semi-persistent SRS resource set or no semi-persistent SRS resource set is configured for the terminal; or
in a case that the network side device configures 2 semi-persistent SRS resource sets and 2 aperiodic SRS resource sets for the terminal, no periodic SRS resource set is configured for the terminal; or
in a case that the network side device configures 2 semi-persistent SRS resource sets and 2 aperiodic SRS resource sets for the terminal, maximum 5 SRS resource sets are configured for the terminal.

18. The SRS resource configuration method according to claim 16, wherein the SRS resource set configured by the network side device for the terminal is selected from a first combination, and the first combination comprises at least one of the following:
1 aperiodic SRS resource set;
2 aperiodic SRS resource sets;
1 semi-persistent SRS resource set;
1 semi-persistent SRS resource set and 1 aperiodic SRS resource set;
1 semi-persistent SRS resource set and 2 aperiodic SRS resource sets;
2 semi-persistent SRS resource sets;
2 semi-persistent SRS resource sets and 1 aperiodic SRS resource set;
2 semi-persistent SRS resource sets and 2 aperiodic SRS resource sets;
1 periodic SRS resource set;
1 periodic SRS resource set and 1 aperiodic SRS resource set;
1 periodic SRS resource set and 2 aperiodic SRS resource sets;
1 periodic SRS resource set and 1 semi-persistent SRS resource set;
1 periodic SRS resource set, 1 semi-persistent SRS resource set, and 1 aperiodic SRS resource set;
1 periodic SRS resource set, 1 semi-persistent SRS resource set, and 2 aperiodic SRS resource sets;
1 periodic SRS resource set and 2 semi-persistent SRS resource sets;
1 periodic SRS resource set, 2 semi-persistent SRS resource sets, and 1 aperiodic SRS resource set; and
1 periodic SRS resource set, 2 semi-persistent SRS resource sets, and 2 aperiodic SRS resource sets.

19. The SRS resource configuration method according to claim 5 or 16, wherein the network side device configures a plurality of SRS resource sets for the terminal, and resource types of the plurality of SRS resource sets are not exactly the same.

20. An SRS resource configuration method, comprising:
reporting, by a terminal, a supported antenna switching capability for SRS to a network side device; and
receiving, by the terminal, SRS configuration information of the network side device, wherein the SRS configuration information indicates the number of SRS resource sets configured by the network side device for the terminal based on the antenna switching capability.

21. The SRS resource configuration method according to claim 20, wherein the antenna switching capability comprises a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets.

22. The SRS resource configuration method according to claim 21, wherein in a case that the terminal reports supporting the first antenna switching capability, the number of periodic SRS resource sets configured for the terminal is determined based on the maximum number N of periodic SRS resource sets supported by the first antenna switching capability, and N is an integer;
in a case that the terminal reports supporting the first antenna switching capability, the number of semi-persistent SRS resource sets configured for the terminal is determined based on the maximum number M of semi-persistent SRS resource sets supported by the first antenna switching capability, and M is an integer; and
in a case that the terminal reports supporting the second antenna switching capability, the number of aperiodic SRS resource sets configured for the terminal is determined based on the maximum number K of aperiodic SRS resource sets supported by the second antenna switching capability, and K is an integer.

23. The SRS resource configuration method according to claim 21, wherein the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

24. An SRS resource configuration apparatus, comprising:
a receiving module, configured to receive a supported antenna switching capability for SRS reported by a terminal;
a processing module, configured to determine, based on the antenna switching capability, the number of SRS resource sets configured for the terminal; and
a sending module, configured to send SRS configuration information to the terminal, wherein the SRS configuration information indicates the number of the SRS resource sets.

25. The SRS resource configuration apparatus according to claim 24, wherein the antenna switching capability comprises at least one of a first antenna switching capability and a second antenna switching capability, the first antenna switching capability indicates that the terminal supports maximum N periodic SRS resource sets and maximum M semi-persistent SRS resource sets, and the second antenna switching capability indicates that the terminal supports maximum K aperiodic SRS resource sets.

26. The SRS resource configuration apparatus according to claim 25, wherein the processing module is specifically configured to perform at least one of the following:
in a case that the terminal reports supporting the first antenna switching capability, determining, based on the maximum number N of periodic SRS resource sets supported by the first antenna switching capability, the number of periodic SRS resource sets configured for the terminal, wherein N is an integer;
in a case that the terminal reports supporting the first antenna switching capability, determining, based on the maximum number M of semi-persistent SRS resource sets supported by the first antenna switching capability, the number of semi-persistent SRS resource sets configured for the terminal, wherein M is an integer; and
in a case that the terminal reports supporting the second antenna switching capability, determining, based on the maximum number K of aperiodic SRS resource sets supported by the second antenna switching capability, the number of aperiodic SRS resource sets configured for the terminal, wherein K is an integer.

27. The SRS resource configuration apparatus according to claim 25, wherein the first antenna switching capability supports maximum 1 periodic SRS resource set and/or maximum 2 semi-persistent SRS resource sets; and the second antenna switching capability supports an antenna switching transmission mode of 1 transmit antenna and 4 receive antennas in which 4 aperiodic SRS resource sets are configured, an antenna switching transmission mode of 1 transmit antenna and 2 receive antennas in which 2 aperiodic SRS resource sets are configured, and an antenna switching transmission mode of 2 transmit antennas and 4 receive antennas in which 2 aperiodic SRS resource sets are configured.

28. An SRS resource configuration apparatus, comprising:
a reporting module, configured to report a supported antenna switching capability for SRS to a network side device; and
a receiving module, configured to receive SRS configuration information of the network side device, wherein the SRS configuration information indicates the number of SRS resource sets configured by the network side device for the terminal based on the antenna switching capability.

29. A terminal, comprising a processor and a memory, wherein the memory stores a program or an instruction that can be run on the processor, and the program or the instruction is executed by the processor to implement steps of the SRS resource configuration method according to any one of claims 20 to 23.

30. A network side device, comprising a processor and a memory, wherein the memory stores a program or an instruction that can be run on the processor, and the program or the instruction is executed by the processor to implement steps of the SRS resource configuration method according to any one of claims 1 to 19.

31. A readable storage medium, wherein the readable storage medium stores a program or an instruction, and when the program or the instruction is executed by a processor, steps of the SRS resource configuration method according to any one of claims 1 to 19 are implemented, or steps of the SRS resource configuration method according to any one of claims 20 to 23 are implemented.

32. A chip, comprising a processor and a communications interface, wherein the communications interface is coupled to the processor, and the processor is configured to run a program or an instruction to implement steps of the SRS resource configuration method according to any one of claims 1 to 19 or steps of the SRS resource configuration method according to any one of claims 20 to 23.

33. A computer program product, wherein the computer program product is stored in a non-volatile storage medium, and the computer program product is executed by at least one processor to implement steps of the SRS resource configuration method according to any one of claims 1 to 19 or steps of the SRS resource configuration method according to any one of claims 20 to 23.

34. A communications device, configured to perform steps of the SRS resource configuration method according to any one of claims 1 to 19 or steps of the SRS resource configuration method according to any one of claims 20 to 23.
